# EUROPEAN PATENT APPLICATION

(11) **EP 4 769 999 A1**
(43) Date of publication of application: **01.07.2026**
(21) Application number: 25215878.7
(22) Date of filing: 14.11.2025
(51) Int. Cl.: H04L 9/00, G06F 1/26

(54) **VOLTAGE REGULATOR**

(30) Priority: 26.12.2024 US 202419002218
(71) Applicant: Intel Corporation, Santa Clara, CA 95054 (US)
(72) Inventor: MATHEW, Sanu, Portland, 97229 (US); KRISHNAMURTHY, Harish, Beaverton, 97006 (US); KUMAR, Raghavan, Hillsboro, 97124 (US); GONG, Minxiang, Portland, 97229 (US)
(74) Representative: Viering, Jentschura & Partner mbB Patent- und Rechtsanwälte

(57) **Abstract**

An apparatus includes a first multiplier circuit, a second multiplier circuit, a first adder circuit, and a second adder circuit. The first multiplier circuit receives a sensed voltage signal and generates a first weighted sensed voltage signal based on the sensed voltage signal. The second multiplier circuit receives a first buffered sensed voltage signal and generates a second weighted sensed voltage signal based on the first buffered sensed voltage signal. The first adder circuit generates a combined sensed voltage signal based on the first weighted sensed voltage signal and the second weighted sensed voltage signal. The second adder circuit generates a duty ratio signal based on a first weighted duty ratio signal and the combined sensed voltage signal.

## Description

### BACKGROUND

Cryptographic engines, such as AES, RSA, and elliptic-curve cryptography, are susceptible to physical side-channel attacks (SCAs). The side-channel attacks exploit device leakage information in the form of power, electromagnetic emissions (EM), etc., to extract the embedded secret key. The goal of side-channel suppression techniques is to provide a significant boost in minimum traces to disclose (MTD), which is the minimum number of encryption traces required to disclose the first secret key byte. Conventional power-regulator-based SCA-resistant techniques provide a considerable boost in time-domain MTD but fall short in frequency-domain SCA analysis, as the induced transformations are often linear and can be exposed in the frequency spectrum.

### BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings listed below.
FIG. 1 is a graph of a spectrogram of AES current trace, in accordance with some embodiments.
FIG. 2 is a block diagram of a non-linear LDO architecture for side-channel resistance, in accordance with some embodiments.
FIG. 3 illustrates a diagram of non-linear LDO control loop circuits., in accordance with some embodiments.
FIG. 4 and FIG. 5 are graphs of SCA-aware control loop randomization studies, in accordance with some embodiments.
FIG. 6 is a block diagram of a non-linear digital LDO (NL-DLDO) randomization circuit architecture, in accordance with some embodiments.
FIG. 7 is a graph of NL-DLDO randomization impact on frequency-domain SCA resistance, in accordance with some embodiments.
FIG. 8 is a block diagram of a digital controller architecture, in accordance with some embodiments.
FIG. 9, FIG. 10, and FIG. 11 illustrate diagrams of example tiles of a switched capacitor-based IVR, in accordance with some embodiments.
FIG. 12 is a flow diagram of an example method for manufacturing a digital controller, in accordance with some embodiments.
FIG. 13 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

As used herein, the term "IO" indicates input/output. As used herein, the term "R-C" indicates resistance and capacitance. As used herein, the term "Rx" indicates receiver (or receive). As used herein, the term "Tx" indicates transmitter (or transmit). As used herein, the term "TRX" indicates transceiver. As used herein, the term "UCIe" indicates Universal Chiplet Interconnect Express. As used herein, the term "Vref" indicates reference voltage. As used herein, the term "Vin" indicates input voltage. As used herein, the terms "serially coupled," "serially connected," and "connected in series" are synonymous to each other and indicate a serial connection between two or more components/circuits where the serial connection can be based on a direct or indirect electrical connection between the two or more components/circuits. As used herein, the terms "parallel coupled," "parallel connected," and "connected in parallel" are synonymous to each other and indicate a parallel connection between two or more components/circuits where the parallel connection can be based on a direct or indirect electrical connection between the two or more components/circuits.

The disclosed techniques can be used to configure non-linear control loop randomizations to achieve frequency-domain side-channel leakage suppression. The proposed techniques also include stability-aware control-loop randomizations to enhance integrated voltage regulator (IVR) (or other types of VRs) efficiency while providing enhanced side-channel resistance.

Prior solutions to mitigate side-channel attacks include a linear lowdropout regulator augmented with randomized switching noise injection to bolster SCA resistance. The linear low dropout regulators (LDOs) provide more than 3 orders of magnitude time-domain MTD improvement while providing a minimal frequency-domain SCA resistance.

The other countermeasures include random masking and arithmetic transformations. In random masking, a random mask is added to the data before computation. The intermediate nodes are in the masked domain, thereby breaking the correlation between the processed data and the measured power or electromagnetic (EM) traces. In arithmetic transformations, the individual slices in an AES data path are designed using different composite-field polynomials with a randomized byte dataflow, thereby breaking the static relationship between the power profiles and processed data.

The linear LDOs provide a modest frequency-domain MTD improvement of ~100 times, while time-domain improvements are over 2000 times. Hence, simple pre-processing of collected power and EM traces using short-time Fourier transforms can reveal secret key bytes effectively.

The first-order random masking technique incurs more than 100% area and power overheads. Also, masking techniques are susceptible to higher-order attacks, and SCA mitigation for higher-order attacks incurs area and power overheads proportional to the order of attacks.

While arithmetic transformations incur lower area and power overheads than random masking (28/23% area and power overheads, respectively), the amount of time and frequency-domain MTD improvements (~1100 times) is lower than masking techniques.

The disclosed techniques include an IVR augmented with stability-aware non-linear control loop randomizations. The IVR can be biased at the peak side-channel resistance setting, and the IVR control loop knobs can be randomly perturbated within a small dynamic range to further enhance frequency-domain side-channel leakage suppression. The proposed techniques enable more than three orders of magnitude improvement in frequency-domain side-channel resistance compared to a conventional linear LDO used for side-channel leakage suppression.

The following disclosed techniques can be used to configure a non-linear LDO with control knobs randomization.

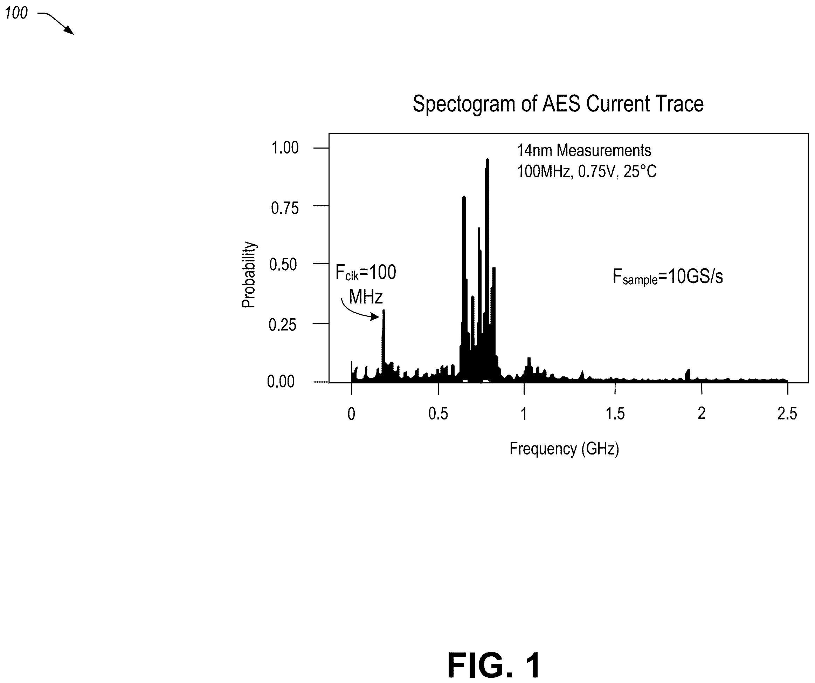

FIG. 1 is a graph 100 of a spectrogram of AES current trace, in accordance with some embodiments. More specifically, graph 100 is a spectrogram of current traces measured from a standalone AES fabricated in 14nm CMOS, operating at 100 MHz, 0.75V, and 25°C, indicating significant information content in 600-800 MHz frequency bands. Transforming the AES spectrum to reduce SCA leakage in these bands falls beyond the realm of LDOs with classical linear control, and an integrated voltage regulator with a fast non-linear response can be used to load transients.

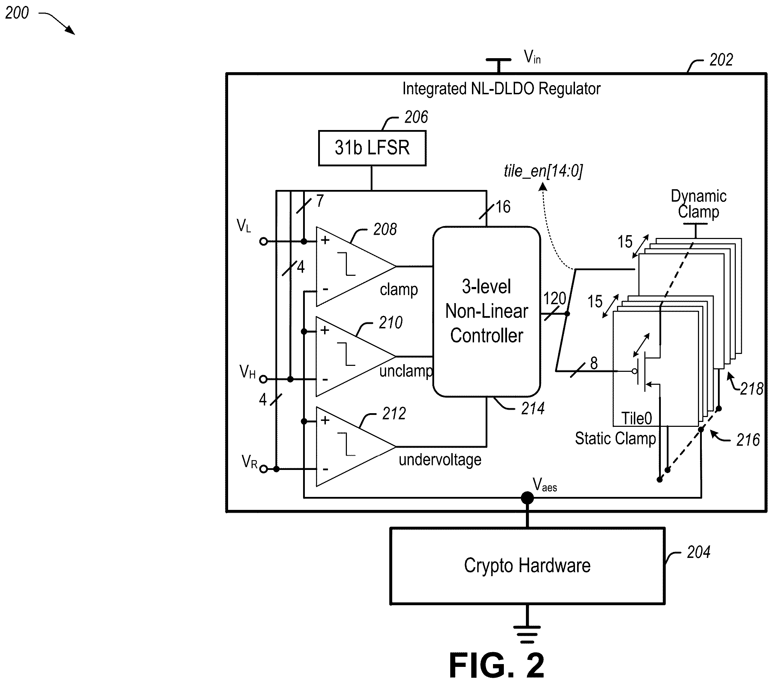

FIG. 2 is a block diagram of a non-linear digital LDO (NL-DLDO) architecture 200 for side-channel resistance, in accordance with some embodiments. Referring to FIG. 2, the NL-DLDO architecture 200 comprises an NL-DLDO regulator 202 coupled to a cryptographic (or crypto) hardware 204.

The NL-DLDO regulator 202 comprises a liner feedback shift register (LFSR) 206, a 3-level non-linear controller 214, comparators 208, 210, and 212, and a two-dimensional power train. The two-dimensional power train comprises 15 tunable-strength PMOS tiles forming static clamp 216 and dynamic clamp 218.

In some aspects, the number of PMOS tiles can be configured depending on the load current. Each PMOS tile can be configured to operate in one of the following three modes:
(a) static current source with tunable strength up to 1.2mA in 40µA steps controlled by an 8b binary-weighted gray code;
(b) tunable dynamic clamp to bolster powertrain during fast transients; and
(c) variable combination of static and dynamic clamps.

In some aspects, an event-driven non-linear control (NLC) loop is asynchronously triggered by three output comparators (e.g., comparators 208, 210, and 212) at high (V_{H}), low (V_{L}) and undervoltage (V_{R}) thresholds to continuously modulate the number/strength of active static/dynamic tiles.

When Vout<V_{L}, the clamp signal turns on all the dynamic tiles determined by the dynamic[7:0] setting. When Vout>V_{H}, the unclamp signal disables all the dynamic tiles. When Vout<V_{R}, all the dynamic tiles are enabled with a max dynamic[7:0] setting. Inside the V_{L}-V_{H} window, active tile count and strength are determined by static[7:0] and tile_en[14:0] signals, respectively. The tile_en signal acts as a global enable signal for the static tile. If the static tile is enabled, the strength of the tile is controlled by the static[7:0] setting.

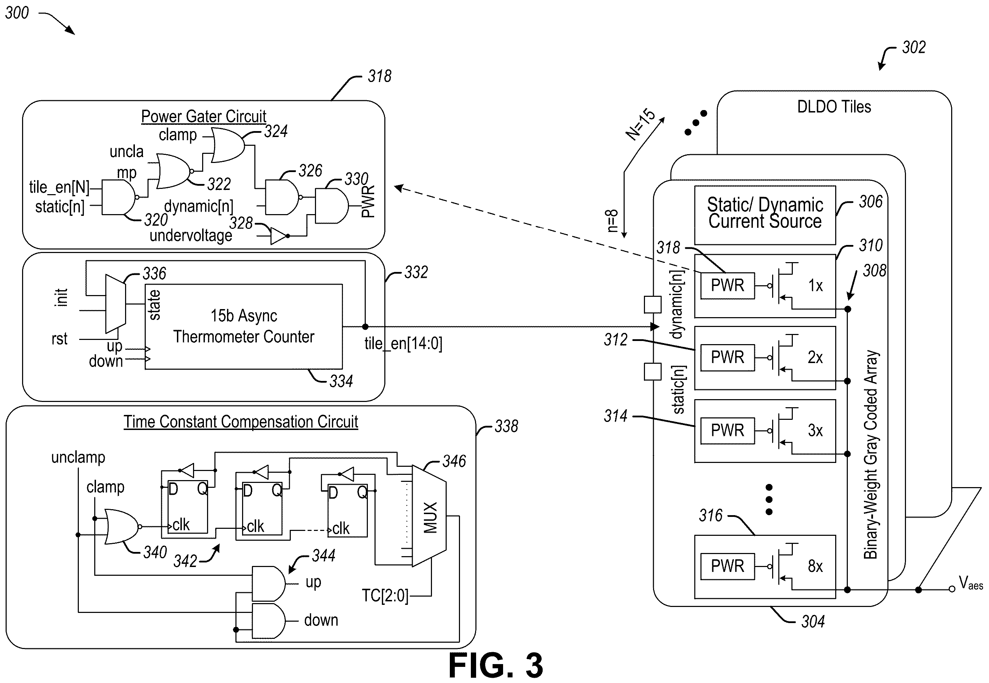

In some aspects, each tile comprises 8 PMOS powertrains, with the strength controlled by an 8b binary-weighted gray code (e.g., 1x,1x,2x,2x,4x,4x,8x,8x, as illustrated in FIG. 3, with 8 representing the mostsignificant powertrain). This results in a max static/dynamic setting of 30 when all eight powertrains are enabled.

FIG. 3 illustrates diagram 300 of non-linear LDO control loop circuits., in accordance with some embodiments. Referring to FIG. 3, the control loop circuits include DLDO tiles 302 (forming clamps 216 and 218), power gater circuit 318, tile enable circuit 332, and time constant compensation circuit 338.

A DLDO tile 304 (of the control loop circuits include DLDO tiles 302) includes a current source 306 and a plurality of powertrains 308 (e.g., comprising powertrains 310, 312, 314, ..., 316 with a corresponding plurality of power gater circuits such as power gater circuit 318).

The power gater circuit 318 comprises NAND gate 320, NOR gate 322, OR gate 324, NAND gate 326, AND gate 330, and inverter 328.

The tile enable circuit 332 comprises a thermometer counter 334 and a multiplexer 336.

The time constant compensation circuit 338 uses a chain of D flip-flops connected in a daisy-chained fashion to delay the generation of up/down signals at the onset of clamp/unclamp events. More specifically, the time constant compensation circuit 338 comprises NOR gate 340, flip-flops 342, AND gates 344, and multiplexer 346.

Controller 214 uses a 15b thermometer-code up/down counter to track and respond to transient events. The counter generates a 15b tile_en[14:0] signal to turn on/off individual PMOS tiles. The power gater circuit 318 uses the comparator outputs and tile_en signals to control the powertrains 308. Each tile is controlled by an 8b binary-weighted gray code with a range of 1-30. The power gater circuit 318 turns on all tiles (PWR signal=0) during an undervoltage event. During a clamp event, the circuit enables the power train as determined by the dynamic[n] setting. During an unclamp operation, the power gater circuit 318 disables all the dynamic tiles. The LDO also implements a time constant (TC) compensation circuit 338 to vary the number of clamp/unclamp events that occur between tile count updates.

The following configurations can be used for frequency-domain SCA optimization.

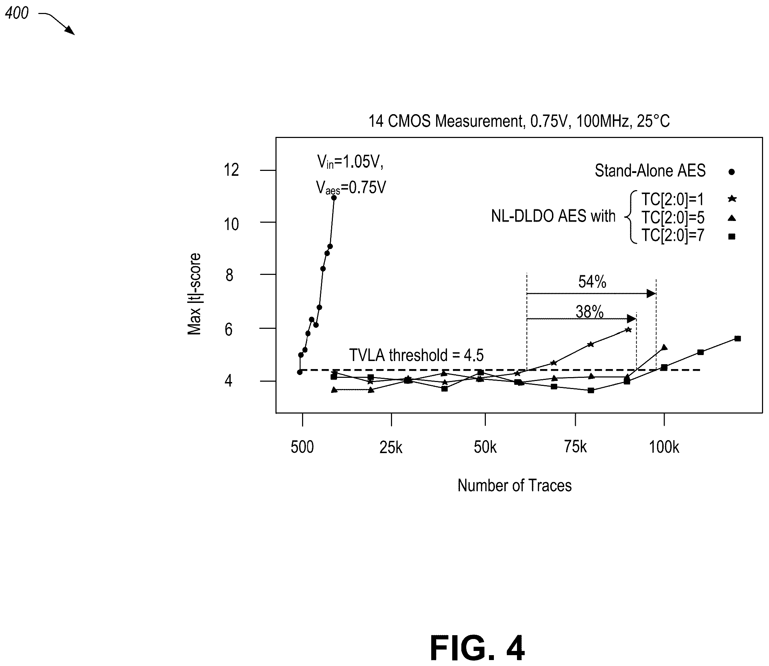

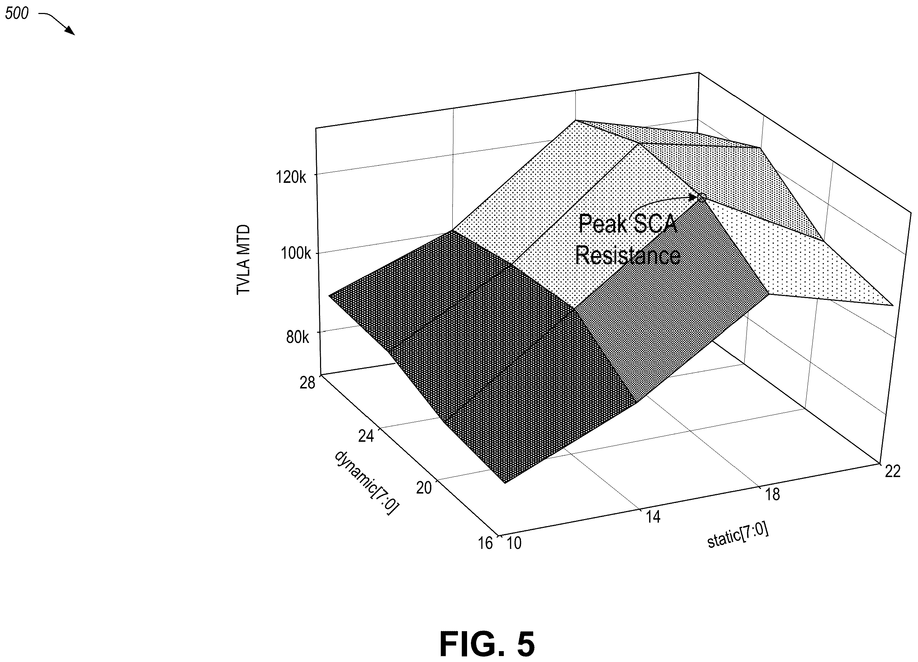

FIG. 4 and FIG. 5 are corresponding graphs 400 and 500 of SCA-aware control loop randomization studies, in accordance with some embodiments.

Two sets of NLC control loop parameters can be used to improve the frequency-domain SCA resistance: (1) TC factor and (2) static and dynamic clamp strengths. TC=1 produces an up/down signal for every clamping event, while TC=7 produces up/down signals for every seven events. TC settings of 5-7 filter out high-frequency switching transients, improving the frequency-domain MTD by 38-54% (e.g., FIGS. 4-5). Similarly, clamp strength static[7:0] modulates regulator output resistance by turning on/off PMOS legs in active tiles. While high output resistances (static<14) create frequent clamping events, low resistance settings (static>20) propagate high-frequency transients back to Vin, resulting in information leakage. Dynamic[7:0] controls the magnitude of overdrive added to the powertrain at clamp events, modulating the slew rate of ramp-up current at each droop. A sweep of static and dynamic clamp strengths shows peak SCA resistance at static=18, dynamic=20, TC=7 with MTD measurement of 129K, a 258× improvement over standalone AES.

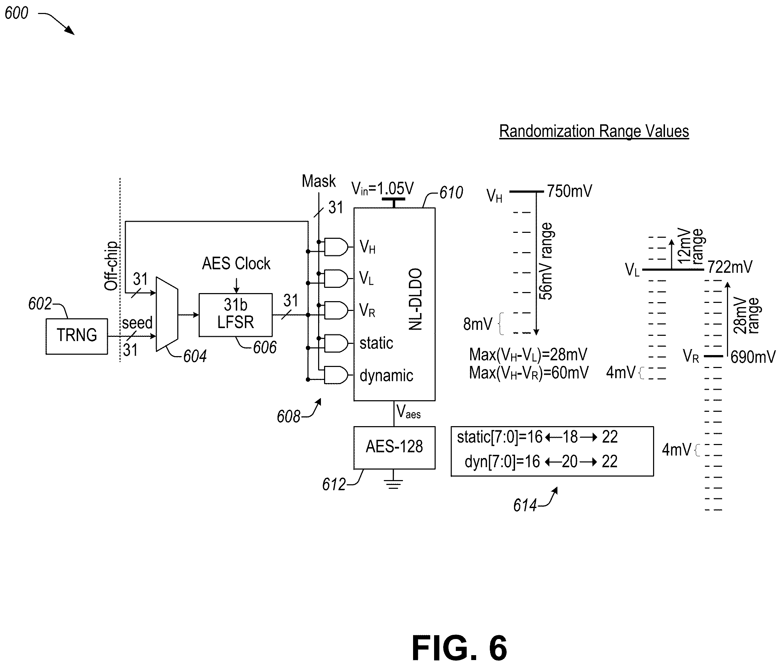

With NL-DLDO biased at peak SCA resistance settings (e.g., FIGS. 4-5; static=18, dynamic=20, TC=7), an additional degree of non-linearity is injected into the NLC loop by randomizing thresholds V_{H}/V_{L}/V_{R} and clamp strengths using a 31b LFSR (e.g., FIG. 6).

FIG. 6 is a block diagram of a non-linear digital LDO (NL-DLDO) randomization circuit architecture 600, in accordance with some embodiments. Referring to FIG. 6, architecture 600 includes a true random number generator (TRNG) 602, a multiplexer 604, LFSR 606, AND gates 608, NL-DLDO circuit 610, and AES hardware 612. FIG. 6 also illustrates example randomization range values 614.

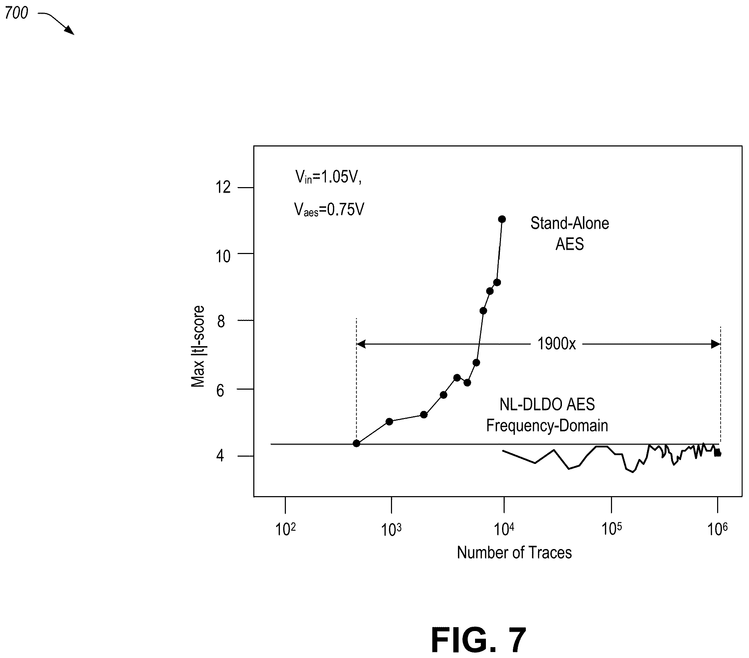

The 31b LFSR 606 is periodically reseeded with a seed obtained from the TRNG 602 to eliminate LFSR's periodicity-induced correlations. Continuously variable static and dynamic clamp strengths alter the frequency spectrum of current ramps during clamping events, further boosting non-linear loop behavior. To prevent NL-DLDO instability, a 31b mask value is used to ensure minimum separation between V_{H}, V_{L}, and V_{R} levels. This enables the IVR to operate within the stability region, thereby not compromising the IVR's efficiency. Frequency-domain TVLA on 1M traces indicates that the randomized NL-DLDO provides a 1900× MTD increase over an unprotected AES (e.g., as illustrated in FIG. 7).

FIG. 7 is graph 700 of NL-DLDO randomization impact on frequency-domain SCA resistance, in accordance with some embodiments.

The disclosed techniques also include other stability-aware IVR techniques (e.g., buck-based IVR techniques) for SCA resistance, as discussed below.

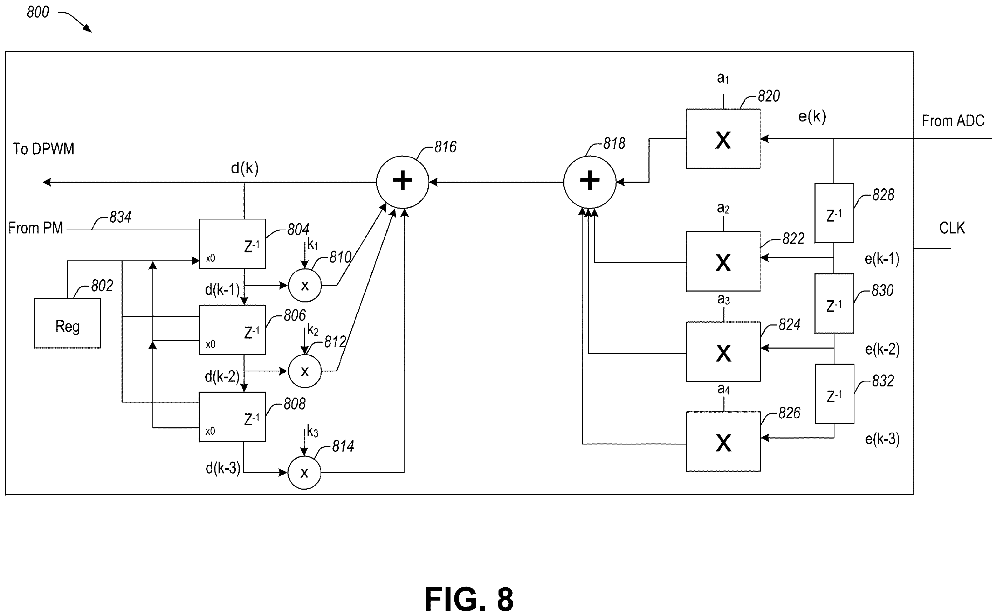

In some aspects, buck regulators can provide SCA resistance based on modulating the bandwidth of the controller for randomizing the reaction time of the IVR to collude the current signatures. While this is marginally better, it is still not bulletproof against SCA attacks. However, this approach might also result in unwanted overdesign of the input decoupling or the input filter due to the negative resistance behavior of the closed-loop buck converter. However, the disclosed techniques can be used to randomize the response of the buck converter and avoid any implications for stability. For example, the disclosed techniques can include toggling between open loop operation and closed loop operation, as explained in reference to FIG. 8 below.

The following configurations can be based on open loop-closed loop dithering.

FIG. 8 is a block diagram of a digital controller architecture, in accordance with some embodiments. Referring to FIG. 8, digital controller 800 can receive inputs (e.g., sensed voltage signals e(k)) from an ADC of a buck IVR and can communicate outputs (e.g., a duty ratio signal d(k)) to a digital pulse width modulator (DPWM) of the buck IVR.

In some aspects, digital controller 800 can include multiplier circuits 820, 822, 824, and 826 and admittance function circuits 828, 830, and 832. Digital controller 800 can also include multiplier circuits 810, 812, and 814 and admittance function circuits 804, 806, and 808. Digital controller 800 also includes a register 802 and adder circuits 816 and 818.

The admittance function circuits can include one or more other circuits (e.g., buffers, flip-flops, resistors, inductors, etc.) and can represent a reciprocal processing function (e.g., to generate and store a previous sample). For example, if e(k) is the currently sensed voltage signal, corresponding signals e(k-1), e(k-2), and e(k-3) are previously sensed voltage signals that can be stored by the corresponding admittance function circuits 828, 830, and 832.

Multiplier circuits 820, 822, 824, and 826 can be configured to apply corresponding weights a1, a2, a3, and a4 to the sensed voltage signals to generate weighted sensed voltage signals. The weighted sensed voltage signals are added by adder circuit 818 to generate a combined sensed voltage signal.

If d(k) is the currently generated duty ratio signal, corresponding signals d(k-1), d(k-2), and d(k-3) are previous duty ratio signals that can be generated and stored by the corresponding admittance function circuits 804, 806, and 808.

Multiplier circuits 810, 812, and 814 can be configured to apply corresponding weights k1, k2, and k3 to the duty ratio signals to generate weighted duty ratio signals. The weighted duty ratio signals are added by adder circuit 816 to generate the current duty ratio signal d(k).

In closed-loop operation, the calculation of d(k) includes the combined sensed voltage signal (e.g., the connection between adder circuits 816 and 818 is not interrupted).

In some aspects, register 802 is used to provide a randomized value, which can be used in an open-loop operation. More specifically, in an open-loop operation (which can be initiated by a control signal 834 from a power management (PM) circuit), the calculation of d(k) does not include the combined sensed voltage signal (e.g., the connection between adder circuits 816 and 818 is interrupted).

In some aspects, the digital controller 800 (e.g., a buck converter controller) is designed with a multiply-accumulate block (MAB), as shown in FIG. 8. The MAB implements the required poles and zeros of a compensator (e.g., Type-I, II, or Type-III) depending upon the necessary bandwidth.

The input of the digital controller 800 is the error number from ADC (e.g., e(k), which represents sensed voltage Vout of the buck IVR). Each time a new e(k) is generated from the ADC, it will push the previous value to e(k-1). The output of the digital controller 800 is the duty ratio number d(k), which is sent to the DPWM. Similarly, each time a new d(k) is generated, it will push the previous number to d(k-1). The DPWM will change the pulse width according to d(k), hence changing the Vout of the buck IVR, which forms a feedback or close loop operation.

In some aspects, two distinct sets of multiplication and addition can be configured for the digital controller 800. One is from the error side coming from the ADC, and the second is the multiply-and-accumulate functionality coming from the previous values of the duty ratio d[k], which are shown as memory elements whose values can be overwritten from register settings.

When the controller is placed in an open loop, the feedback from Vout to DPWM is interrupted (e.g., by setting a pre-known value of the register that overwrites the duty cycle). If the Buck converter operates in an open loop (which is determined by the control signal 834), then the multiplier circuits 820-826 are disengaged from the error side. In some aspects, digital controller 800 can also use the last known value of d(k) and randomize the register values with an LFSR. These configurations do not violate any stability and can significantly improve the overall side channel protection of the SIVR.

The disclosed techniques also include the following switched capacitor-based stability-aware techniques.

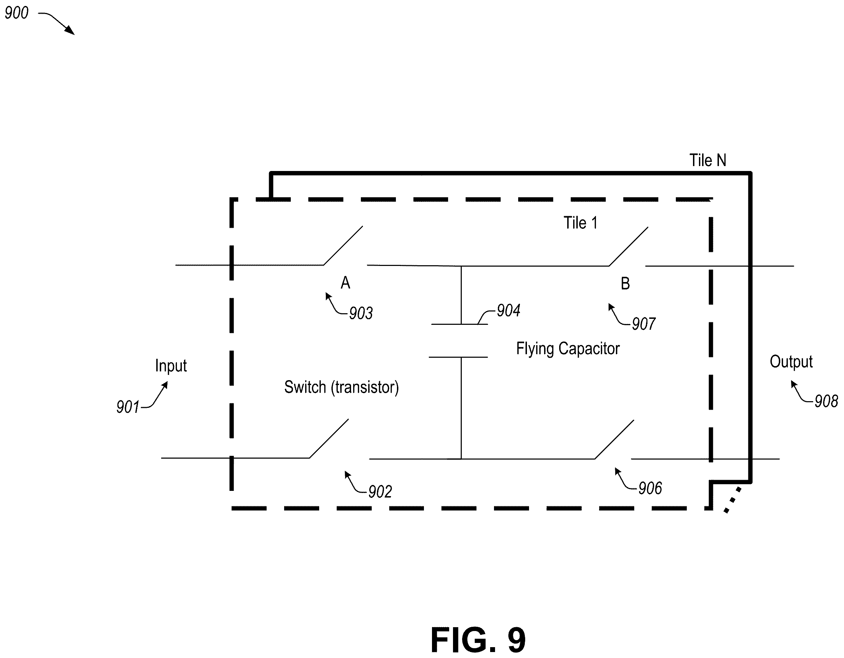

FIG. 9, FIG. 10, and FIG. 11 illustrate corresponding diagrams of example tiles of a switched capacitor-based IVR, in accordance with some embodiments.

In some aspects, SCVRs can be configured to include switches and capacitors that are generally tiled in multiple phases. In some aspects, the SCVR can implement multiple ratios to vary the output voltage and the associated input current, as well as provide side-channel resistance. An alternate method to reconfigure the switched capacitor-based SIVRs further is to enable the following modes that might further help improve side-channel resistance.

In some aspects, SCVR can include multiple processing tiles to form a multi-phase interleaved operation (e.g., as illustrated in FIG. 9). For example, FIG. 9 shows an example of such tile (e.g., tile 900) consisting of one flying capacitor 904 and four switches (e.g., switches 902, 903, 906, and 907) configured between input terminals 901 and output terminals 908.

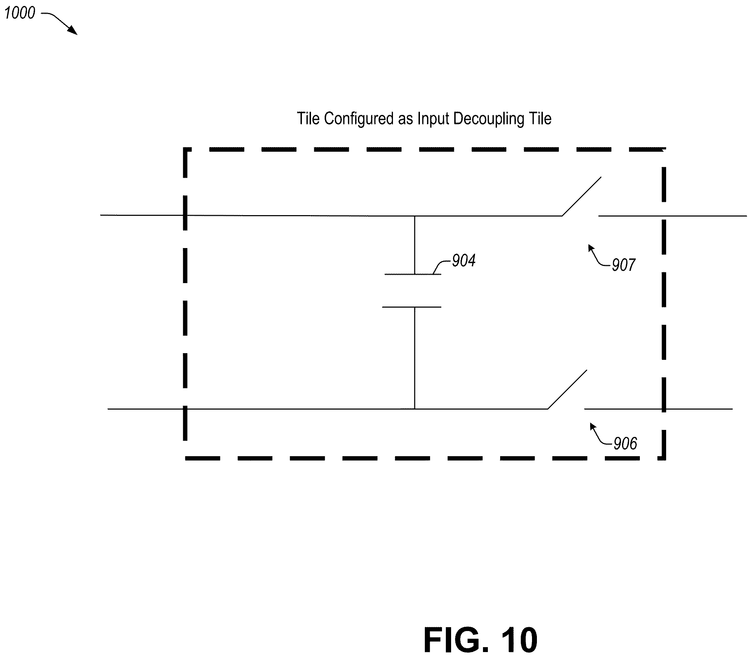

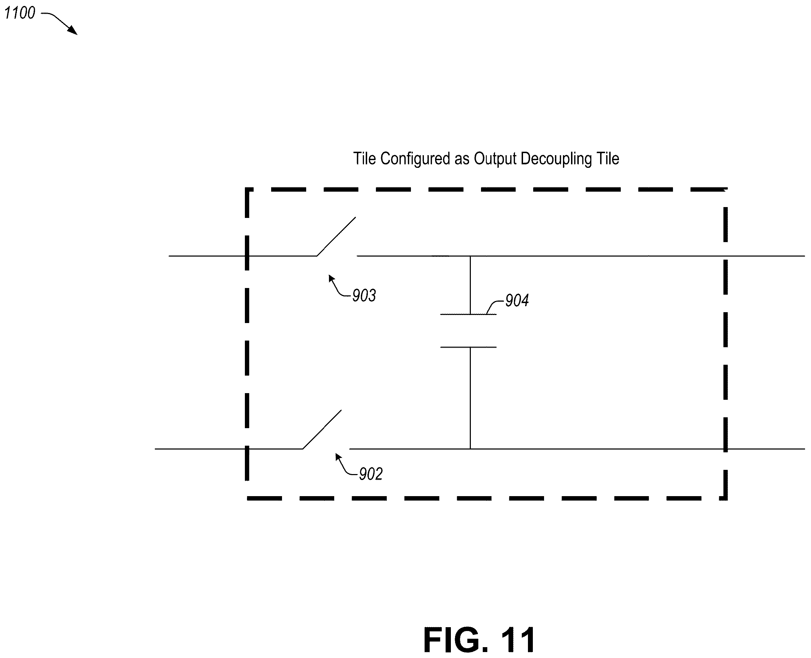

In some aspects, tile 900 can be configured as an input decoupling tile (e.g., as illustrated in diagram 1000 of FIG. 10) or as an output decoupling tile (e.g., as illustrated in diagram 1100 of FIG. 11).

In some aspects, reconfiguring one or more unused or redundant tiles of the SIVR can modify input and output voltage ripple, which will also help in increasing side-channel resistance.

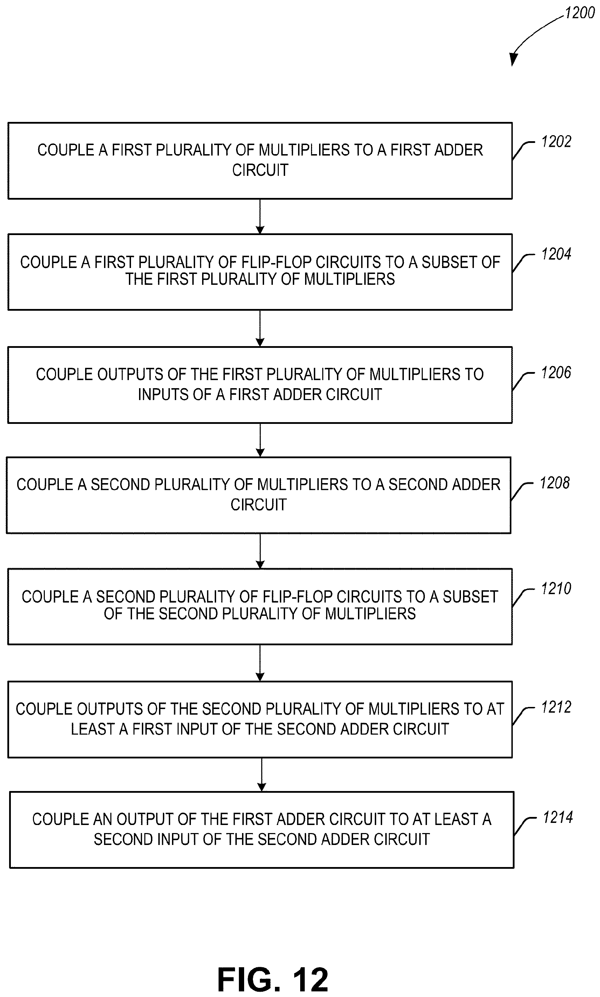

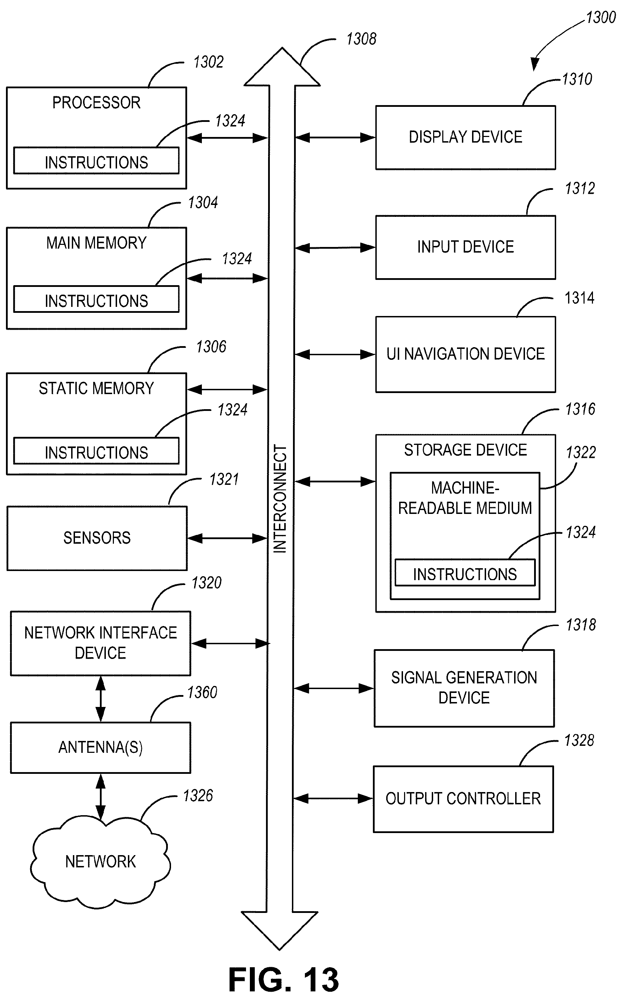

FIG. 12 is a flow diagram of an example method 1200 for manufacturing a digital controller circuit, in accordance with some embodiments. Referring to FIG. 12, method 1200 includes operations 1202, 1204, 1206, 1208, 1210, 1212, and 1214, which may be executed by a processor, an embedded controller, a receiver circuit, a transceiver circuit, or another processor of a computing device (e.g., hardware processor 1302 of machine 1300 illustrated in FIG. 13, which can include one or more of the circuits discussed in connection with FIGS. 1-11). In some embodiments, one or more of the circuits discussed in connection with FIGS. 1-11 can perform the functionalities (or include the configurations or circuitry) associated with FIG. 12, as well as one or more of the examples listed below.

At operation 1202, a first plurality of multipliers is coupled to a first adder circuit.

At operation 1204, a first plurality of flip-flop circuits is coupled to a subset of the first plurality of multipliers.

At operation 1206, outputs of the first plurality of multipliers are coupled to inputs of a first adder circuit.

At operation 1208, a second plurality of multipliers is coupled to a second adder circuit.

At operation 1210, a second plurality of flip-flop circuits is coupled to a subset of the second plurality of multipliers.

At operation 1212, outputs of the second plurality of multipliers are coupled to at least a first input of the second adder circuit.

At operation 1214, an output of the first adder circuit is coupled to at least a second input of the second adder circuit.

FIG. 13 illustrates a block diagram of an example machine 1300 upon which any one or more of the techniques (e.g., methodologies) discussed herein may perform. In alternative embodiments, the machine 1300 may operate as a standalone device or may be connected (e.g., networked) to other machines. In a networked deployment, machine 1300 may operate in the capacity of a server machine, a client machine, or both in server-client network environments. In an example, machine 1300 may function as a peer machine in a peer-to-peer (P2P) (or other distributed) network environment. The machine 1300 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 1300 may include a hardware processor 1302 (e.g., a central processing unit (CPU), a graphics processing unit (GPU), a hardware processor core, or any combination thereof), a main memory 1304, and a static memory 1306, some or all of which may communicate with each other via an interlink (e.g., bus) 1308. In some aspects, the main memory 1304, the static memory 1306, or any other type of memory (including cache memory) used by machine 1300 can be configured based on the disclosed techniques or can implement the disclosed memory devices.

Specific examples of main memory 1304 include Random Access Memory (RAM) and semiconductor memory devices, which may include, in some embodiments, storage locations in semiconductors such as registers. Specific examples of static memory 1306 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 1300 may further include a display device 1310, an input device 1312 (e.g., a keyboard), and a user interface (UI) navigation device 1314 (e.g., a mouse). In an example, the display device 1310, the input device 1312, and the UI navigation device 1314 may be a touchscreen display. The machine 1300 may additionally include a storage device (e.g., drive unit or another mass storage device) 1316, a signal generation device 1318 (e.g., a speaker), a network interface device 1320, and one or more sensors 1321, such as a global positioning system (GPS) sensor, compass, accelerometer, or other sensors. The machine 1300 may include an output controller 1328, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 1302 and/or instructions 1324 may comprise processing circuitry and/or transceiver circuitry.

The storage device 1316 may include a machine-readable medium 1322 on which one or more sets of data structures or instructions 1324 (e.g., software) embodying or utilized by any one or more of the techniques or functions described herein can be stored. Instructions 1324 may also reside, completely or at least partially, within the main memory 1304, within static memory 1306, or the hardware processor 1302 during execution thereof by machine 1300. In an example, one or any combination of the hardware processor 1302, the main memory 1304, the static memory 1306, or the storage device 1316 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 1322 is illustrated as a single medium, the term "machine-readable medium" may include a single medium or multiple media (e.g., a centralized or distributed database and/or associated caches and servers) configured to store instructions 1324.

An apparatus of machine 1300 may be one or more of a hardware processor 1302 (e.g., a central processing unit (CPU), a graphics processing unit (GPU), a hardware processor core, or any combination thereof), a main memory 1304 and a static memory 1306, one or more sensors 1321, a network interface device 1320, one or more antennas 1360, a display device 1310, an input device 1312, a UI navigation device 1314, a storage device 1316, instructions 1324, a signal generation device 1318, and an output controller 1328. The apparatus may be configured to perform one or more of the methods and/or operations disclosed herein. The apparatus may be intended as a component of machine 1300 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 1300 and that causes machine 1300 to perform any one or more of the techniques of the present disclosure or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 1324 may further be transmitted or received over a communications network 1326 using a transmission medium via the network interface device 1320 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.8.4 family of standards, a Long Term Evolution (LTE) family of standards, a Universal Mobile Telecommunications System (UMTS) family of standards, peer-to-peer (P2P) networks, among others.

In an example, the network interface device 1320 may include one or more physical jacks (e.g., Ethernet, coaxial, or phone jacks) or one or more antennas to connect to the communications network 1326. In an example, the network interface device 1320 may include one or more antennas 1360 to wirelessly communicate using at least one single-input multiple-output (SIMO), multiple-input multiple-output (MIMO), or multiple-input single-output (MISO) techniques. In some examples, the network interface device 1320 may wirelessly communicate using multiple-user MIMO techniques. The term "transmission medium" shall be taken to include any intangible medium that can store, encode, or carry instructions for execution by machine 1300 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, examples that include the elements shown or described are also contemplated. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is an apparatus comprising a first multiplier circuit comprising an input terminal and an output terminal, the input terminal to receive a sensed voltage signal; a first adder circuit comprising a first input terminal and an output terminal, the first input terminal of the first adder circuit coupled to the output terminal of the first multiplier circuit; a second multiplier circuit comprising an input terminal and an output terminal, the output terminal of the second multiplier circuit coupled to a second input terminal of the first adder circuit; and a second adder circuit comprising a first input terminal and an output terminal, the first input terminal of the second adder circuit coupled to the output terminal of the first adder circuit.

In Example 2, the subject matter of Example 1 includes a first flip-flop circuit comprising an input terminal coupled to the input terminal of the first multiplier circuit and an output terminal coupled to the input terminal of the second multiplier circuit.

In Example 3, the subject matter of Example 2 includes a second flip-flop circuit comprising an input terminal coupled to the output terminal of the first flip-flop circuit.

In Example 4, the subject matter of Example 3 includes a third multiplier circuit comprising an input terminal and an output terminal, the input terminal of the third multiplier circuit coupled to an output terminal of the second flip-flop circuit, and the output terminal of the third multiplier circuit coupled to a third input terminal of the first adder circuit.

In Example 5, the subject matter of Example 4 includes a third flip-flop circuit comprising an input terminal coupled to the output terminal of the second flip-flop circuit.

In Example 6, the subject matter of Example 5 includes a fourth multiplier circuit comprising an input terminal and an output terminal, the input terminal of the fourth multiplier circuit coupled to an output terminal of the third flip-flop circuit, and the output terminal of the fourth multiplier circuit coupled to a fourth input terminal of the first adder circuit.

In Example 7, the subject matter of Example 6 includes a fifth multiplier circuit comprising an output terminal coupled to a second input terminal of the second adder circuit and a fourth flip-flop circuit comprising an input terminal coupled to the output terminal of the second multiplier circuit and an output terminal coupled to an input terminal of the fifth multiplier circuit.

In Example 8, the subject matter of Example 7 includes a fifth flip-flop circuit comprising an input terminal coupled to the output terminal of the fourth flip-flop circuit.

In Example 9, the subject matter of Example 8 includes a sixth multiplier circuit comprising an input terminal and an output terminal, the input terminal of the sixth multiplier circuit coupled to an output terminal of the fifth flip-flop circuit, and the output terminal of the sixth multiplier circuit coupled to a third input terminal of the second adder circuit.

In Example 10, the subject matter of Example 9 includes a sixth flip-flop circuit comprising an input terminal coupled to the output terminal of the fifth flip-flop circuit.

In Example 11, the subject matter of Example 10 includes a seventh multiplier circuit comprising an input terminal and an output terminal, the input terminal of the seventh multiplier circuit coupled to an output terminal of the sixth flip-flop circuit, and the output terminal of the seventh multiplier circuit coupled to a fourth input terminal of the second adder circuit.

In Example 12, the subject matter of Examples 1-11 includes a system-on-chip (SoC), the SoC comprising an integrated circuit (IC), the IC comprising at least two of the first multiplier circuit, the second multiplier circuit, the first adder circuit, and the second adder circuit.

In Example 13, the subject matter of Example 12 includes subject matter where the SoC further comprises at least one connector and wherein the at least one connector conforms with at least one of a Universal Serial Bus (USB) specification, a High-Definition Multimedia Interface (HDMI) specification, a Thunderbolt specification, a Peripheral Component Interconnect Express (PCIe) specification, and an Ethernet specification.

Example 14 is an apparatus comprising a first multiplier circuit, the first multiplier circuit to receive a sensed voltage signal and generate a first weighted sensed voltage signal based on the sensed voltage signal; a second multiplier circuit, the second multiplier circuit to receive a first buffered sensed voltage signal and generate a second weighted sensed voltage signal based on the first buffered sensed voltage signal; a first adder circuit coupled to the first multiplier circuit and the second multiplier circuit, the first adder circuit to generate a combined sensed voltage signal based on the first weighted sensed voltage signal and the second weighted sensed voltage signal; and a second adder circuit coupled to the first adder circuit, the second adder circuit to generate a duty ratio signal based on a first weighted duty ratio signal and the combined sensed voltage signal.

In Example 15, the subject matter of Example 14 includes a third multiplier circuit, the third multiplier circuit to receive a second buffered sensed voltage signal corresponding to the first buffered sensed voltage signal and generate a third weighted sensed voltage signal based on the second buffered sensed voltage signal; and wherein the first adder circuit generates the combined sensed voltage signal further based on the third weighted sensed voltage signal.

In Example 16, the subject matter of Example 15 includes a fourth multiplier circuit, the fourth multiplier circuit to receive a third buffered sensed voltage signal corresponding to the second buffered sensed voltage signal and generate a fourth weighted sensed voltage signal based on the third buffered sensed voltage signal; and wherein the first adder circuit generates the combined sensed voltage signal further based on the fourth weighted sensed voltage signal.

In Example 17, the subject matter of Example 16 includes a fourth flip-flop circuit coupled to the second adder circuit, the fourth flip-flop circuit to generate a first buffered duty ratio signal based on the duty ratio signal; a fifth multiplier circuit, the fifth multiplier circuit to receive the first buffered duty ratio signal and generate a first weighted duty ratio signal based on the first buffered duty ratio signal; and wherein the second adder circuit generates the duty ratio signal further based on the first weighted duty ratio signal.

In Example 18, the subject matter of Example 17 includes a fifth flip-flop circuit coupled to the fourth flip-flop circuit, the fifth flip-flop circuit to generate a second buffered duty ratio signal based on the first buffered duty ratio signal; a sixth multiplier circuit, the sixth multiplier circuit to receive the second buffered duty ratio signal and generate a second weighted duty ratio signal based on the second buffered duty ratio signal; and wherein the second adder circuit generates the duty ratio signal further based on the second weighted duty ratio signal.

In Example 19, the subject matter of Example 18 includes a sixth flip-flop circuit coupled to the fifth flip-flop circuit, the sixth flip-flop circuit to generate a third buffered duty ratio signal based on the second buffered duty ratio signal; a seventh multiplier circuit, the seventh multiplier circuit to receive the third buffered duty ratio signal and generate a third weighted duty ratio signal based on the third buffered duty ratio signal; and wherein the second adder circuit generates the duty ratio signal further based on the third weighted duty ratio signal.

Example 20 is a process of making a digital controller circuit, comprising coupling a first plurality of multipliers to a first adder circuit, coupling a first plurality of flip-flop circuits to a subset of the first plurality of multipliers, coupling outputs of the first plurality of multipliers to inputs of a first adder circuit, coupling a second plurality of multipliers to a second adder circuit, coupling a second plurality of flip-flop circuits to a subset of the second plurality of multipliers, coupling outputs of the second plurality of multipliers to at least a first input of the second adder circuit, and coupling an output of the first adder circuit to at least a second input of the second adder circuit. In some aspects, the subject matter of Example 20 includes coupling an input of at least one multiplier of the second plurality of multipliers to a register.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. An apparatus comprising:
a first multiplier circuit comprising an input terminal and an output terminal, the input terminal to receive a sensed voltage signal;
a first adder circuit comprising a first input terminal and an output terminal, the first input terminal of the first adder circuit coupled to the output terminal of the first multiplier circuit;
a second multiplier circuit comprising an input terminal and an output terminal, the output terminal of the second multiplier circuit coupled to a second input terminal of the first adder circuit; and
a second adder circuit comprising a first input terminal and an output terminal, the first input terminal of the second adder circuit coupled to the output terminal of the first adder circuit.

2. The apparatus of claim 1, further comprising:
a first flip-flop circuit comprising an input terminal coupled to the input terminal of the first multiplier circuit and an output terminal coupled to the input terminal of the second multiplier circuit.

3. The apparatus of claim 2, further comprising:
a second flip-flop circuit comprising an input terminal coupled to the output terminal of the first flip-flop circuit.

4. The apparatus of claim 3, further comprising:
a third multiplier circuit comprising an input terminal and an output terminal, the input terminal of the third multiplier circuit coupled to an output terminal of the second flip-flop circuit, and the output terminal of the third multiplier circuit coupled to a third input terminal of the first adder circuit.

5. The apparatus of claim 4, further comprising:
a third flip-flop circuit comprising an input terminal coupled to the output terminal of the second flip-flop circuit.

6. The apparatus of claim 5, further comprising:
a fourth multiplier circuit comprising an input terminal and an output terminal, the input terminal of the fourth multiplier circuit coupled to an output terminal of the third flip-flop circuit, and the output terminal of the fourth multiplier circuit coupled to a fourth input terminal of the first adder circuit.

7. The apparatus of claim 6, further comprising:
a fifth multiplier circuit comprising an output terminal coupled to a second input terminal of the second adder circuit; and
a fourth flip-flop circuit comprising an input terminal coupled to the output terminal of the second multiplier circuit and an output terminal coupled to an input terminal of the fifth multiplier circuit.

8. The apparatus of claim 7, further comprising:
a fifth flip-flop circuit comprising an input terminal coupled to the output terminal of the fourth flip-flop circuit.

9. The apparatus of claim 8, further comprising:
a sixth multiplier circuit comprising an input terminal and an output terminal, the input terminal of the sixth multiplier circuit coupled to an output terminal of the fifth flip-flop circuit, and the output terminal of the sixth multiplier circuit coupled to a third input terminal of the second adder circuit.

10. The apparatus of claim 9, further comprising:
a sixth flip-flop circuit comprising an input terminal coupled to the output terminal of the fifth flip-flop circuit.

11. The apparatus of claim 10, further comprising:
a seventh multiplier circuit comprising an input terminal and an output terminal, the input terminal of the seventh multiplier circuit coupled to an output terminal of the sixth flip-flop circuit, and the output terminal of the seventh multiplier circuit coupled to a fourth input terminal of the second adder circuit.

12. The apparatus of any one of claims 1 to 11, comprising a system-on-chip (SoC), the SoC comprising an integrated circuit (IC), the IC comprising at least two of the first multiplier circuit, the second multiplier circuit, the first adder circuit, or the second adder circuit;
preferably wherein the SoC further comprises at least one connector, and wherein the at least one connector conforms with at least one of a Universal Serial Bus (USB) specification, a High-Definition Multimedia Interface (HDMI) specification, a Thunderbolt specification, a Peripheral Component Interconnect Express (PCIe) specification, or an Ethernet specification.

13. A process of making a digital controller circuit, comprising:
coupling a first plurality of multipliers to a first adder circuit;
coupling a first plurality of flip-flop circuits to a subset of the first plurality of multipliers;
coupling outputs of the first plurality of multipliers to inputs of a first adder circuit;
coupling a second plurality of multipliers to a second adder circuit;
coupling a second plurality of flip-flop circuits to a subset of the second plurality of multipliers;
coupling outputs of the second plurality of multipliers to at least a first input of the second adder circuit; and
coupling an output of the first adder circuit to at least a second input of the second adder circuit.

14. Machine-readable storage including machine-readable instructions, when executed, causes a computer/transmitter/receiver to implement a method as claimed in claim 13.

15. A computer program comprising instructions which, when the program is executed by a computer, cause the computer to carry out a method as claimed in claim 13.
